Europäisches Patentamt

European Patent Office

Office européen des brevets

(11) Numéro de publication: **0 346 237**
**A1**

# (12) DEMANDE DE BREVET EUROPEEN

(21) Numéro de dépôt: **89401600.5**

(51) Int. Cl.⁴: **F 16 B 5/02**

(22) Date de dépôt: **09.06.89**

(30) Priorité: **10.06.88 FR 8807749**

(43) Date de publication de la demande:
**13.12.89 Bulletin 89/50**

(84) Etats contractants désignés: **DE ES GB IT**

(71) Demandeur: **REGIE NATIONALE DES USINES RENAULT**
**Boîte postale 103 8-10 avenue Emile Zola**
**F-92109 Boulogne-Billancourt (FR)**

(72) Inventeur: **Legrand, Jean-Pierre**
**40, rue d'Angerviller**
**F-78120 Rambouillet (FR)**

(54) **Agrafe de fixation de pièce plastique.**

(57) Dispositif de fixation sur un élément support (1) d'un élément à fixer (2) ayant un coefficient de dilation différent, et notamment pour le montage d'un élément de carrosserie du type aile en matière plastique sur la caisse en métal d'un véhicule automobile. Ce dispositif comporte au moins deux ensembles ayant chacun un système de retenue de l'élément à fixer (2) qui est immobilisé par un système de blocage (13) sur l'élément support (1), de manière à permettre un réglage au montage, et le déplacement de l'élément à fixer (2) dans la direction privilégiée de la dilatation différentielle de l'élément à fixer.

FIG.1

EP 0 346 237 A1

Description

# AGRAFE DE FIXATION DE PIECE PLASTIQUE

La présente invention concerne un dispositif de fixation sur un élément support, d'un élément à fixer, comme une aile d'automobile.

Dans la construction en grande série des véhicules automobiles, tous les éléments de la carrosserie sont réalisés en tôle d'acier. Certaines pièces, comme les ailes, sont amovibles, et fixées sur la carrosserie par un système de vis permettant leur réglage en position.

Certains modèles, comme les versions sportives, sont équipés d'ailes spéciales en matière plastique (comme le "NORYL GTX"). Les coefficients de dilation étant différents entre la matière plastique constituant les ailes et l'acier constituant la structure, on constate un déplacement important de l'aile par rapport à la structure lors du passage en étuve de la caisse, pour la cuisson de la peinture. Après s'être refroidis, les éléments de la carrosserie retrouvent leur dimension et position d'origine. On comprend que les moyens de fixation des ailes en acier ne sont pas utilisables pour la fixation des ailes en matière plastique qui ont un coefficient de dilation différent de celui de l'acier.

Pour les mêmes raisons, la vis étant immobilisée dans la structure, il existe un mouvement relatif de celle-ci par rapport à l'aile lors du passage en étuve après peinture, ce qui provoque un défaut d'aspect car la peinture est arrachée sous la tête de la vis.

On connait une grande variété d'agrafes de maintien élastique, mais tous ces systèmes laissent une liberté de déplacement selon deux axes.

L'invention décrit un dispositif simple caractérisé en ce qu'il fournit un système fixation d'un élément à positionner sur un élément support tout en permettant à cet élément à positionner, un mouvement relatif dans une direction privilégiée.

Les avantages obtenus grâce à cette invention consistent en ce que cette agrafe comprend une entretoise (bloquée après réglage de l'élément à fixer sur l'élément support) servant de guidage selon une direction privilégiée à l'élément à fixer, et de lèvres élastiques assurant le maintien de cet élément à fixer. L'agrafe permet donc un réglage et un blocage selon une direction, et une libertée de déplacement contrôlée selon une autre direction.

Les dessins annexés illustrent l'invention :

- la figure 1 représente une agrafe prisonnière dans l'élément à fixer, réalisée en tôle d'acier ;
- la figure 2 représente une section 2-2 de la figure 1 ;
- la figure 3 représente une section 3-3 de la figure 1 ;
- la figure 4 représente une agrafe en tôle d'acier, munie d'une vis de fixation prisonnière ;
- la figure 5 représente une section 5-5 de la figure 4 ;
- la figure 6 représente une section 6-6 de la figure 4 ;
- la figure 7 représente une agrafe prisonnière dans l'élément à fixer, possédant un couvercle destiné à masquer la tête de la vis, et réalisée en matière plastique ;
- la figure 8 représente une section 8-8 de la figure 7 ;
- la figure 9 représente une agrafe en matière plastique munie d'une vis de fixation prisonnière ;
- la figure 10 représente une section 10-10 de la figure 9 ;
- la figure 11 représente une agrafe prisonnière dans l'élément à fixer et réalisée en matière plastique ;
- la figure 12 représente une section 12-12 de la figure 11 ;
- la figure 13 représente une autre agrafe prisonnière de l'élément à fixer, réalisée en matière plastique ;
- la figure 14 représente une section 14-14 de la figure 13 ;
- la figure 15 représente une agrafe prisonnière de l'élément à fixer et réalisée en matière plastique ;
- la figure 16 représente une section 16-16 de la figure 15.

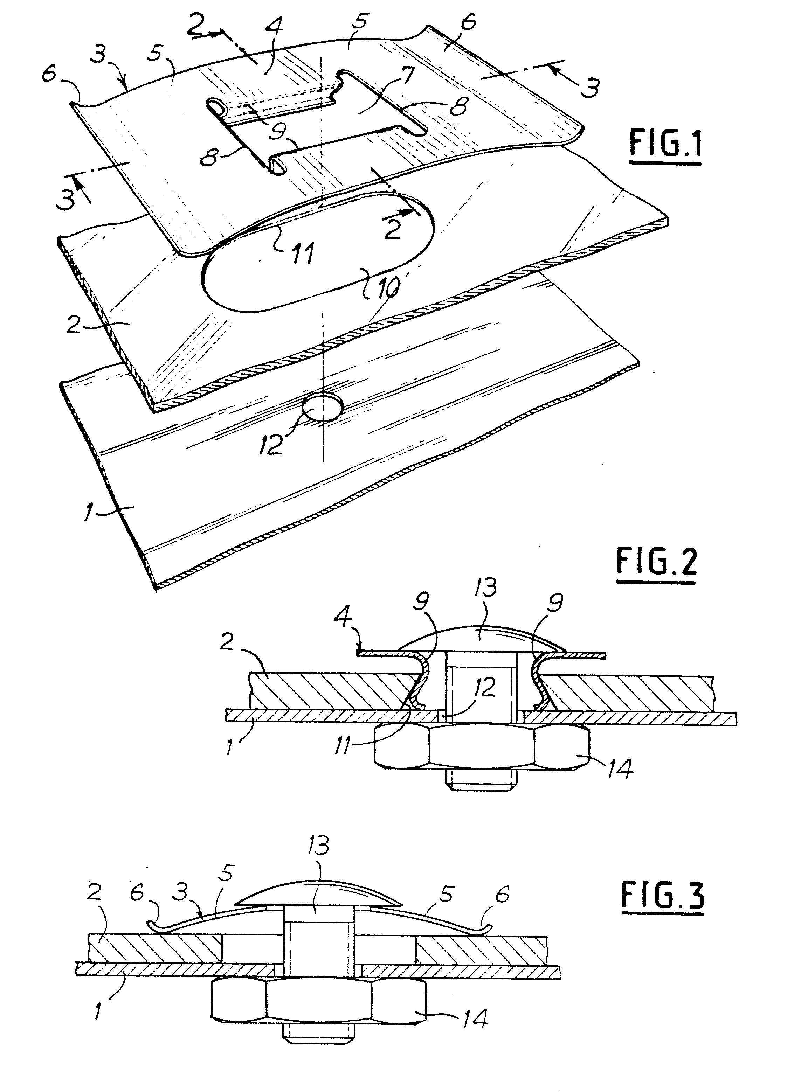

La figure 1 représente une agrafe de fixation d'un élément à fixer 2 sur un élément support 1 ayant un coefficient de dilation différent. Cette agrafe est réalisée en tôle d'acier à ressort et comprend une plaque dont la partie centrale 4 est plane et dont les deux extrémités qui se font face présentent une partie à cambrure 5 qui se termine par un bord arrondi relevé 6.

La figure 2 représente la section 2-2 de la figure 1 : le centre de la plaque 4 présente un ajour 7 à quatre côtés perpendiculaires avec deux bords simple 8 et deux bords tombés 9 servant d'entretoise à la vis de fixation 13. Ces bords forment un angle aîgu avec la partie supérieure de la plaque 4 de façon à rendre l'agrafe prisonnière d'une lumière 11 aménagée dans l'élément à fixer 2 et leur extrémité présente un retour 13 destiné à ne pas blesser l'élément support 1.

La figure 3 représente une section 3-3 de la figure 1. Elle montre la forme des cambrures 5 et 6 de la plaque 4 ainsi que l'appui de la tête de la vis de fixation 13.

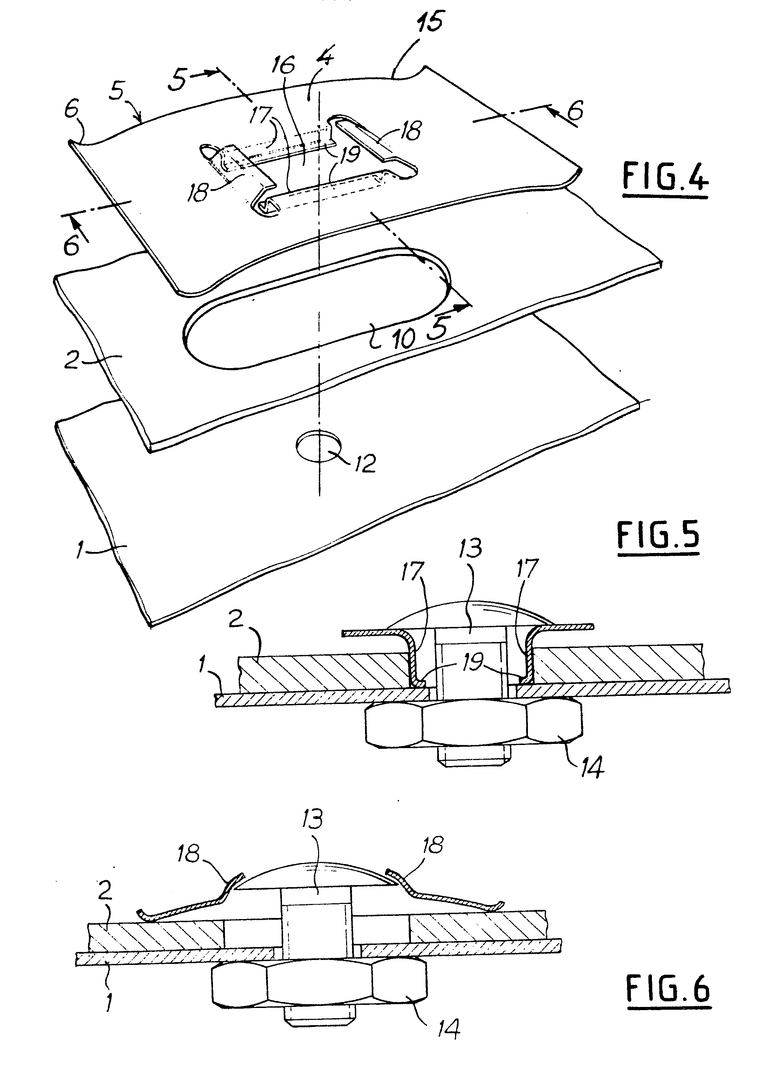

La figure 4 représente une agrafe 15, variante de l'agrafe métallique décrite précédemment : elle comprend une plaque centrale 4 avec des parties à cambrure 5 et 6 décrite sur la figure 1.

La figure 5 représente une section 5-5 de la figure 4. Le centre de la plaque 4 présente un ajour 16 à quatre côtés perpendiculaires avec deux bords tombés 17 servant d'entretoise à la vis de fixation 13. Ces bords, présentant à leur extrémité un retour 19 destiné à ne pas blesser l'élément support 1, coulissent dans une lumière 10 aménagée dans l'élément à fixer 2.

La figure 6 représente une section 6-6 de la figure 4 : les deux bords 18, perpendiculaire aux bords 17 de la plaque 4, forment au-dessus de l'ajour 16 un retour destiné à emprisonner la tête de la vis de fixation 13.

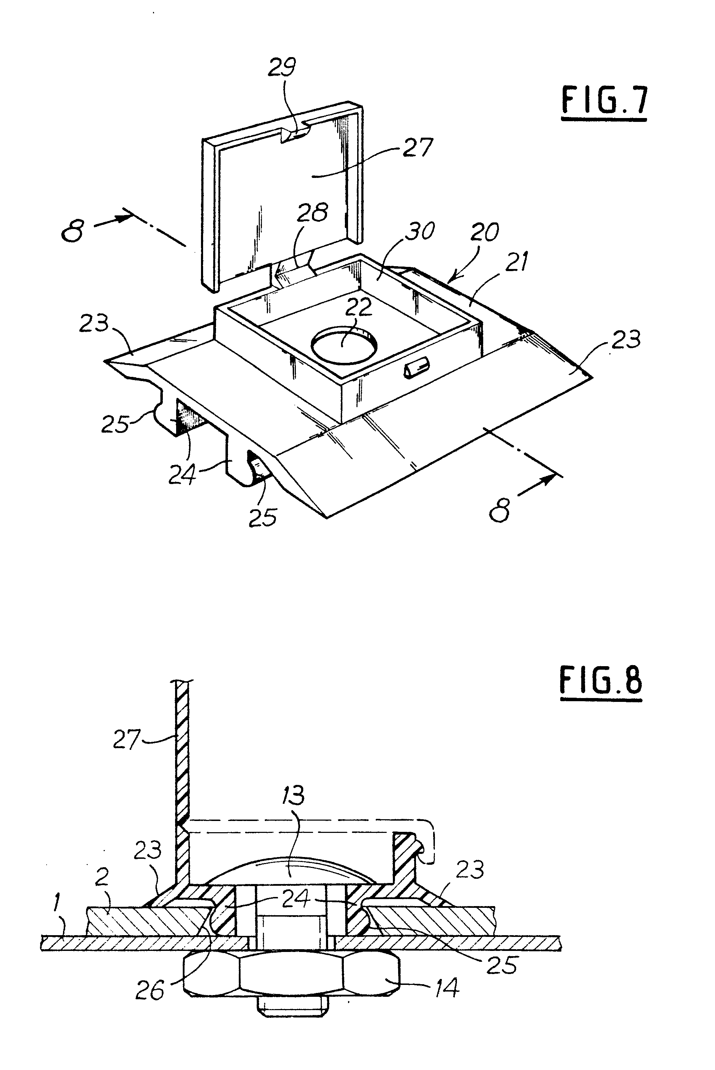

La figure 7 décrit une agrafe 20 assurant les mêmes fonctions que les agrafes métalliques précédentes, mais qui est réalisée en matière plastique moulée. Elle est constituée par un profilé qui comporte une plaque 21 munie en son centre d'un trou 22 de passage de la vis de fixation 13, et prolongée sur les deux côtés longitudinaux de deux lèvres 23 destinées à assurer le maintien de l'élément à fixer 2. Sous la plaque 21 et parallèlement aux lèvres 23, se trouvent deux languettes 24 servant d'entretoise à la vis de fixation 13 et de guidage à l'élément à fixer 2 ; ces languettes 24 sont munies chacune d'un renflement inférieur 25 de façon à rendre l'agrafe prisonnière de la lumière dont les flancs 26 sont aménagés en contre-dépouille. Un système de cache permet de masquer la tête de la vis 13 ; il est constitué par un couvercle 27 articulé par une charnière 28, venant s'emboîter sur un muret 30 fixé sur la plaque 21 et maintenu par un système de fermeture 29.

La figure 8 représente une section 8-8 de la figure 7. Elle montre plus précisément la forme des lèvres 23, des languettes 24 munies de renflements 25 s'emboîtant dans la lumière 26, et du système de cache de tête de vis composé du couvercle 27, articulé sur le muret 30, et maintenu par le système de fermeture 29.

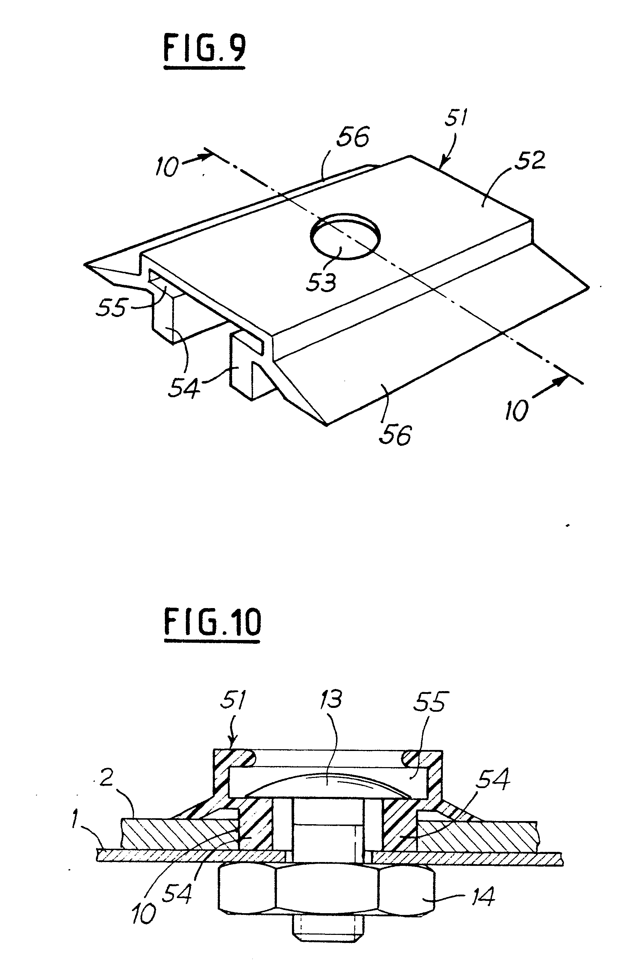

La figure 9 représente une agrafe 51, variante de l'agrafe 20 réalisée elle aussi en matière plastique moulée. Elle est constituée par un profilé qui comporte une plaque 52 munie en son centre d'un trou 53 de passage de la vis de fixation 13 et prolongée sur les deux côtés longitudinaux de deux lèvres 56 destinées à assurer le maintien de l'élément à fixer 2. Sous la plaque 52 et parallèlement aux lèvres 56, se trouvent deux languettes 54 servant d'entretoise à la vis de fixation 13 et de guidage à l'élément à fixer 2 ; ces languettes 54 sont munies chacune d'une rainure 55 se faisant face sur leur partie intérieure de façon à emprisoner la tête de la vis 13.

La figure 10 représente une section 10-10 de la figure 9. Elle montre plus précisément la position et la forme des lèvres 56, des languettes 54 coulissant dans la lumière 10 et des rainures 55 de retenue de la tête de la vis 13.

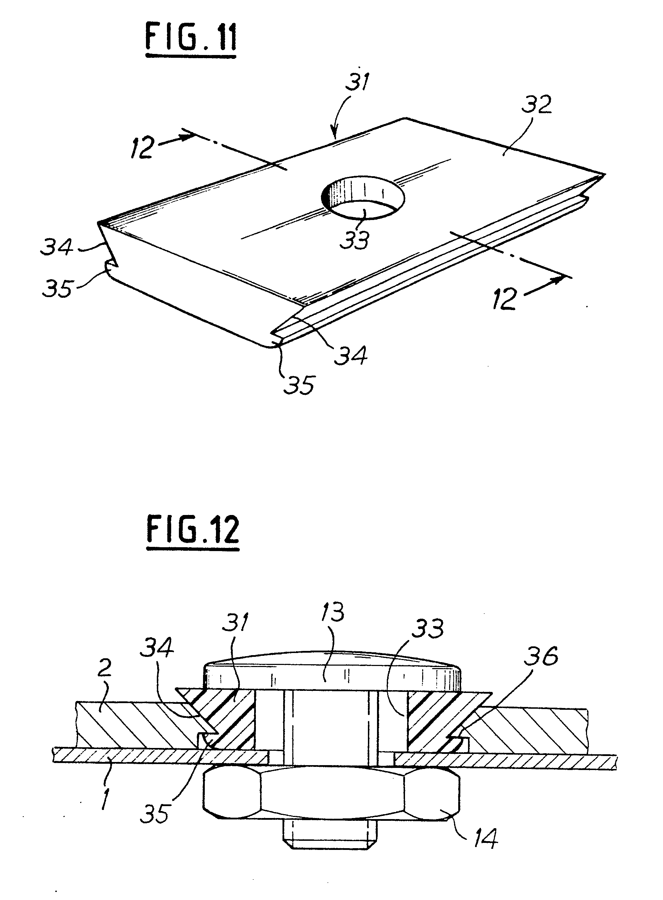

La figure 11 représente une autre réalisation d'une agrafe 31 réalisée en matière plastique moulée ; les deux chants longitudinaux forment une queue d'aronde 34 qui s'ajuste dans la lumière 36 aménagée dans l'élément à fixer 2, et deux talons de retenue 35 de l'agrafe 31 dans l'élément à fixer 2.

La figure 12 représente une section 12-12 de la figure 11. Elle montre plus précisément les flancs de la queue d'aronde 34, et les talons de retenue 35 qui s'ajustent dans la lumière 36.

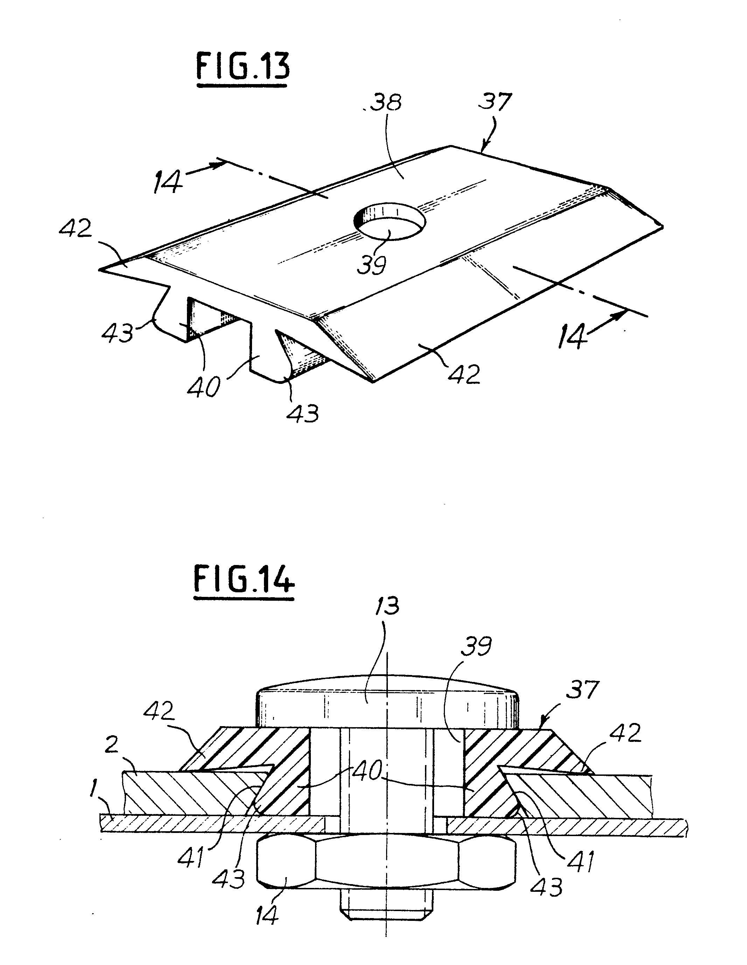

La figure 13 représente une agrafe 37, variante d'agrafe 20 en matière plastique moulée. Elle est constituée d'un profilé qui comporte une plaque 38 munie en son centre d'un trou 39 pour le passage de la vis de fixation 13, et est prolongée sur les deux côtés longitudinaux de deux lèvres 42 destinées à assurer le maintien de l'élément à fixer 2. Sous la plaque 38 et parallèlement aux lèvres 42, se trouvent deux languettes 40 dont les flancs extérieurs forment une queue d'aronde servant de guidage et de retenue de l'agrafe 37 dans la lumière 41 aménagée dans l'élément à fixer 2. Une forme arrondie 43 remplace les angles aigus de la queue d'aronde et facilite l'introduction de l'agrafe 37 dans la lumière 41 de l'élément à fixer 2.

La figure 14 représente une section 14-14 de la figure 13. Elle montre plus précisément la forme des lèvres 42 et des languettes 40 en forme de queue d'aronde avec leur extrémité arrondie 43.

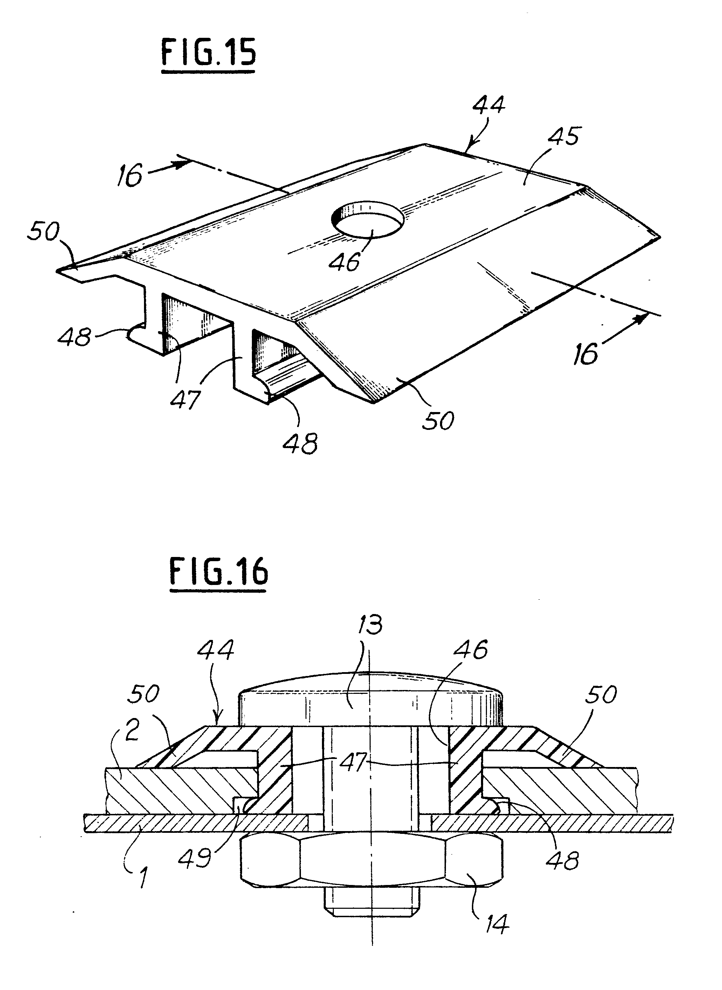

La figure 15 représente une agrafe 44, variante de l'agrafe 37. Elle est constituée par un profilé qui comporte une plaque 45 munie en son centre d'un trou 46 de passage de la vis de fixation 13 et est prolongée sur les deux côtés longitudinaux de deux lèvres 50 destinées à assurer le maintien de l'élément à fixer 2. Sous la plaque 45, et parallèlement aux lèvres 50 se trouvent deux languettes 47 servant d'entretoise à la vis de fixation 13 et de guidage à l'élément à fixer 2 ; ces languettes 47 sont munies chacune d'un renflement inférieur 48 de façon à rendre l'agrafe prisonnière de la lumière dont les flancs possèdent un dégagement 49 servant de logement aux renflements 48 des languettes 47.

La figure 16 représente une section 16-16 de la figure 15. Elle montre plus précisément la position et la forme des lèvres 50, des languettes 47 munies d'un renflement 48 coulissant dans une lumière aménagée dans l'élément à fixer 2 qui possède des dégagements 49 pour le logement des renflements 48.

## Revendications

1. Dispositif de fixation sur un élément support (1) d'un élément à fixer (2) ayant un coefficient de dilatation différent, et notamment pour le montage d'un élément de carrosserie du type aile en matière plastique sur la caisse en métal d'un véhicule automobile, caractérisé en ce qu'il comporte au moins deux ensembles ayant chacun un système de tenue de l'élément à fixer, qui est immobilisé par un système de blocage sur l'élément support (1), de manière à permettre un réglage au montage, et le déplacement de l'élément à fixer (2) dans la direction privilégiée donnée par la dilatation différentielle de l'élément à fixer ; ce déplacement étant autorisé par l'aménagement pour chacun des ensembles d'une lumière (10) dans l'élément à fixer (2), l'élément support (1) ayant un trou de passage (12) du système de blocage.

2. Dispositif de fixation selon la revendication 1, caractérisé en ce que le système de blocage est constitué par une vis (13) dont la tête vient s'appliquer sur le système de tenue, et par un écrou (14) qui vient se serrer sous l'élément support (1).

3. Dispositif de fixation selon la revendication 2, caractérisé en ce que le système de tenue est constitué par une agrafe métallique (3) qui comporte une plaque avec une partie supérieure centrale (4) plane et sur deux de ses côtés qui se font face une partie à cambrure (5) qui se termine par un bord arrondi relevé (6) et qui vient s'appuyer sur l'élément à fixer ; et qui est munie en son centre d'un ajour (7) à quatre côtés perpendiculaires avec deux bords simples (8) et deux bords tombés (9) conformés de manière à faire un angle aigu avec la partie supérieure centrale (4), c'est-à-dire une contre-dépouille, qui coopère avec les côtés (11) en contre-dépouille correspondants de la lumière (10) aménagée dans l'élément à fixer (2), lesdits bords tombés ayant une hauteur déterminée de manière à venir s'appliquer sur l'élément support (1) pour faire entretoise avec la tête de la vis (13).

4. Dispositif de fixation selon la revendication 2, caractérisé en ce que le système de tenue est constitué par une agrafe métallique (15) qui comporte une plaque avec une partie supérieure centrale (4) plane et sur deux de ses côtés qui se font face une partie à cambrure (5) qui se termine par un bord arrondi relevé (6) et qui vient s'appuyer sur l'élément à fixer ; et qui est munie en son centre d'un ajour (16) à quatre côtés perpendiculaires ; avec deux bords tombés (17) perpendiculaires à ladite partie centrale et ayant une hauteur déterminée de manière à venir s'appliquer sur l'élément support (1) pour faire entretoise avec la tête de la vis (13), et qui coopèrent avec les côtés correspondants de la lumière (10) de l'élément à fixer, et avec une patte (18) sur chacun des deux autres bords pour venir emprisonner la tête de la vis (13).

5. Dispositif de fixation selon l'une des revendications 3 et 4, caractérisé en ce que chacun des bords tombés (17) comporte un retour d'extrémité (19).

6. Dispositif de fixation selon la revendication 2, caractérisé en ce que le système de tenue est constitué par une agrafe en matière plastique (20), qui comporte une plaque (21) de passage de la vis, et qui se prolonge sur les deux côtés parallèles aux côtés de la lumière de l'élément à fixer par une lèvre de tenue (23) qui vient s'appuyer sur l'élément à fixer, ladite agrafe ayant en-dessous de la plaque deux languettes (24) munies chacune d'un renflement inférieur (25) qui coopèrent avec les côtés en contre-dépouille (26) correspondants de la lumière de l'élément à fixer (2), lesdites languettes ayant une hauteur déterminée de manière à venir s'appliquer sur l'élément support (1) pour faire entretoise avec la tête de la vis (13).

7. Dispositif de fixation selon la revendication 6, caractérisé en ce que l'agrafe (20) comporte un cache constitué par un couvercle (27) en plastique venant se former sur la plaque (21) au moyen d'une articulation (28) et d'un système de fermeture (29) destiné à masquer la tête de la vis (13).

8. Dispositif de fixation selon la revendication 7, caractérisé en ce que la plaque (21) comporte quatre murets (30) sur lesquels vient s'articuler et se fermer le couvercle (27).

9. Dispositif de fixation selon la revendication 2, caractérisé en ce que le système de tenue est constitué par une agrafe en matière plastique (31) qui est constituée par une plaque en forme de profilé (32) et munie en son centre d'un trou (33) de passage de la vis, et qui a sur les deux côtés parallèles aux côtés de la lumière de l'élément à fixer un profil en queue d'aronde (34) avec un talon inférieur (35), qui coopère avec le profil correspondant (36) des côtés de la lumière ; la hauteur de l'agrafe (31) étant déterminée de manière à venir s'appliquer sur l'élément support (1) pour faire entretoise avec la tête de la vis (13).

10. Dispositif de fixation selon la revendication 2, caractérisé en ce que le système de tenue est constitué par une agrafe en matière plastique (37) qui comporte une plaque en forme de profilé (38) munie en son centre d'un trou (39) de passage de la vis, ladite agrafe ayant en-dessous de la plaque deux languettes en forme de queue d'aronde (40) qui coopèrent avec les côtés en contre-dépouille correspondants (41) de la lumière de l'élément à fixer, la plaque ayant sur chacun de ses côtés parallèles aux côtés de la lumière une lèvre d'appui (42) qui vient s'appliquer sur l'élément à fixer (2), lesdites languettes ayant une hauteur déterminée de manière à venir s'appliquer sur l'élément support (1) pour faire entretoise avec la tête de la vis (13), et étant munies d'un arrondi inférieur (43).

11. Dispositif de fixation selon la revendication 2, caractérisé en ce que la système de tenue est constitué par une agrafe en matière plastique (44), qui comporte une plaque en forme de profilé (45) munie en son centre d'un trou (46) de passage de la vis, ladite agrafe ayant en-dessous de la plaque (45) deux languettes de profil droit et perpendiculaire (47) avec un renflement inférieur (48), qui coopèrent avec les côtés, munis d'un décrochement inférieur (49) de la lumière de l'élément à fixer (2), a plaque ayant sur chacun de ses côtés parallèles aux côtés de la lumière une lèvre d'appui (50) qui vient s'appliquer sur l'élément à fixer (2), lesdites languettes ayant une hauteur déterminée de manière à venir s'appliquer sur l'élément support (1) pour faire entretoise avec la tête de la vis (13).

12. Dispositif de fixation selon la revendication 2, caractérisé en ce que le système de tenue est constitué par une agrafe en matière plastique (51), qui comporte une plaque en forme de profilé (52) munie en son centre d'un trou (53) de passage de la vis, ladite agrafe ayant en-dessous de la plaque deux languettes de profil droit et perpendiculaire (54) qui coopèrent avec les côtés de la lumière (10) de l'élément à fixer (2) et qui possèdent un dégagement (55) de manière à ce que la tête de la vis reste emprisonnée dans l'agrafe, et ayant sur chacun de ses côtés parallèles aux côtés de la lumière une lèvre d'appui (56) qui veint s'appliquer sur l'élément à fixer (2).

FIG.1

FIG.2

FIG.3

EP 0 346 237 A1

**FIG.4**

**FIG.5**

**FIG.6**

FIG.7

FIG.8

# FIG.9

# FIG.10

## FIG. 11

## FIG.12

## FIG.13

## FIG.14

# FIG.15

# FIG.16

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-3 018 014 (KLOECKNER-HUMBOLDT-DEUTZ) * figure 1; page 5, paragraphe 3 * --- | 1 | F 16 B 5/02 |
| A | DE-A-3 418 473 (DAIMLER BENZ) * figure 1 * --- | 1 | |
| A | FR-A-2 157 185 (S.A.R.L. DITE ETUD) * figure 2; page 1, paragraphe 2 * --- | 1 | |
| A | GB-A-2 087 503 (ROLLS-ROYCE) * abrégé * ----- | 1 | |

**DOMAINES TECHNIQUES RECHERCHES (Int. Cl.4)**

F 16 B

Le présent rapport a été établi pour toutes les revendications

| Lieu de la recherche | Date d'achèvement de la recherche | Examinateur |
|---|---|---|
| BERLIN | 24-07-1989 | SCHAEFFLER C.A.A. |